# EUROPEAN PATENT APPLICATION

(11) **EP 3 119 160 A2**
(43) Date of publication of application: **18.01.2017**
(21) Application number: 16165392.8
(22) Date of filing: 14.04.2016
(51) Int. Cl.: H04W 88/04, H04W 8/06

(54) **CONTENT DELIVERY OVER D2D LINKS**

(30) Priority: 17.07.2015 GB 201512616
(71) Applicant: FUJITSU LIMITED, Kawasaki-shi, Kanagawa 211-8588 (JP)
(72) Inventor: LI, Zhaojun, Guildford, Surrey GU3 2DJ (GB); VADGAMA, Sunil Keshavji, Ashford, Middlesex TW15 3RD (GB)
(74) Representative: Stebbing, Timothy Charles

(57) **Abstract**

A content delivery method employing opportunistic D2D links among UEs, in a two-stage process. In a first stage, content is delivered from a content delivery node (40) to a first tier of target UEs (10, 12, 14, 16) through the core network (30) and conventional cellular communication via a base station or access point (20). In the second stage, the target UEs act as relays for other, 2nd tier UEs (11, 13, 15) which wish to receive the content, by delivering the content over opportunistic D2D links. The process is controlled by a service anchor (50) of an operator providing the content delivery service.

## Description

### Field of the Invention

The present invention relates to wireless communication networks, and more particularly to content delivery using device-to-device (D2D) links between mobile devices.

### Background of the Invention

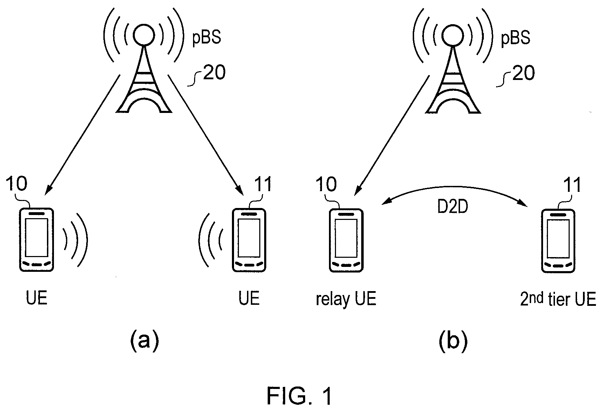

Within the context of a cellular wireless communication network in which mobile devices (UEs) normally communicate via base stations and/or access points (BS/APs), direct, peer-to-peer communication between mobile devices is also possible. Figure 1 shows the basic principle, in which UEs 10 and 11 are initially in communication with a network node in the form of a BS/AP 20 as shown in Figure 1 (a). Mutual discovery of these UEs 10 and 11 in proximity to each other, as indicated by the waves emanating from UEs 10 and 11 in Figure 1(a), leads to direct communication between those UEs as shown in Figure 1(b). Discovery and communications between devices that are in proximity is referred to as device-to-device (D2D) communication. Such communication is referred to as "opportunistic" because it relies on detecting and exploiting the temporary proximity between two terminals.

In D2D communication, it is not necessary for every UE to maintain a direct data path with the BS/AP 20 (which will henceforth be referred to simply as "BS" or "base station" for convenience). In the case of UE 12 in Figure 1(b) for example, the data path may be via UE 10 with which UE 11 is in D2D communication. Thus, D2D involves UEs acting as relays or "donors" for other UEs, at least for user data. In Fig. 1(b), UE 10 is referred to as a "relay UE" for UE 11: user data for downloading to the UE 11 is first transmitted by base station 20 to UE 10 and then relayed from UE 10 to UE 11 over the D2D link. The result is a mixed network comprising a "first tier" of cellular wireless links between base stations and UEs (relay UEs), and a "second tier" of D2D links of relay UEs with other UEs.

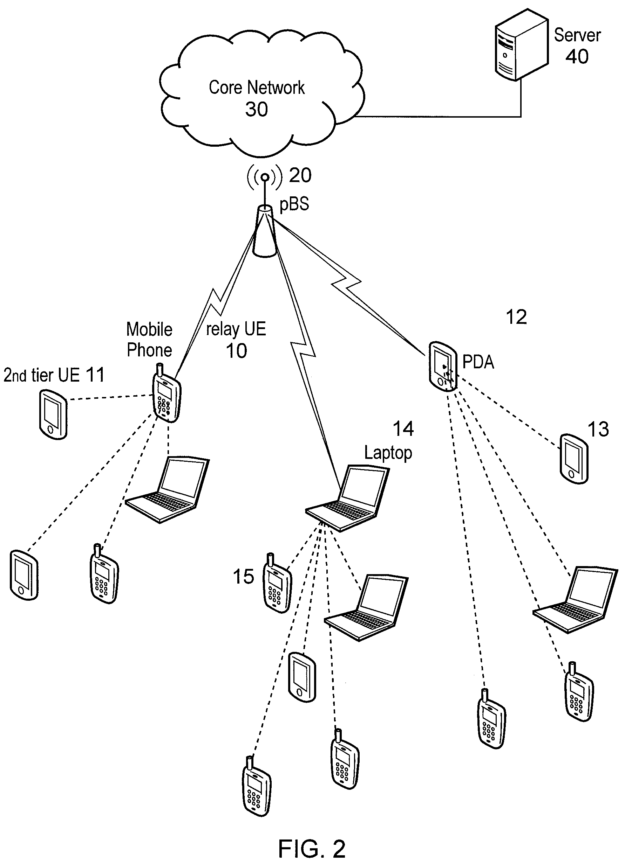

A mixed network such as this is illustrated in Figure 2. As indicated in the Figure, UEs 10 - 15 can be of various types such as mobile phones, laptop computers and PDAs or tablet computers. A UE 10 in the form of a mobile phone has a wireless link with BS 20, whilst another UE 12 in the form of a PDA and a further UE 14 in the form of a laptop computer also have wireless links with BS 20. UE 10 has a D2D link with UE 11, as in Figure 1(b), and D2D links with other UEs also, thereby acting as relay UE for these UEs. Likewise, UE 12 is a relay UE for other UEs such as UE 13, and UE 14 is a relay UE for other UEs such as UE 15. Meanwhile, the BS/AP 20 is connected to a core network including higher-level nodes (not shown in Figure 2) such as a Serving Gateway (S-GW) and a Packet Data Network or PDN Gateway (P-GW). Such higher-level nodes also connect the base station to a server 40 (content delivery node) representing a source of user data, and which may be on the Internet. In addition to such connections for user data (user plane), there is a control plane for managing base stations and mobile devices. For example, in the case of an eNB of a LTE-based wireless communication system, eNBs maintain direct connections with a Mobility Management Entity (MME). Home eNBs (HeNBs) maintain a connection with the operator network via a broadband internet connection.

The precise manner in which D2D communication is conducted is not essential to the invention to be described; however, one scenario is where UEs directly communicate using a different RAT from that used by the cellular wireless links. For example if the wireless cellular links employ LTE/LTE-A then the D2D links may use one or more of the IEEE802.11 WLAN standards commonly referred to as WiFi, in particular so-called WiFi Direct. Thus, D2D can be used to carry user data instead of, or in addition to, a UE's conventional wireless link with a BS. Although D2D communication does not necessarily require any data path to the base station, the focus in the invention to be described is on downloading user data (content) from an external source represented by server 40 in Figure 2.

Henceforth any use of D2D for a data path (or part of a data path) will be referred to as a "D2D link". The conventional wireless links between UEs and a BS will be referred to as "the cellular network" where necessary for clarity, or more generally as "the network". References to "the network" also include higher-layer network entities, where appropriate.

The above discussion has referred to UEs in the form of mobile phones, laptop computers and PDAs or tablets, operated by human users. However, a wireless communication system may also be used for so-called Machine Type Communication (MTC), where MTC is a form of data communication which involves one or more entities that do not necessarily need human interaction. Entities involved in MTC, henceforth referred to as MTC devices, are also to be considered as a kind of UE except where the context demands otherwise. Applications of MTC devices include fleet management, smart metering, product tracking, home automation, e-health, etc. MTC devices are often in fixed locations, in contrast to the mobile devices of human users.

Increasingly, user data consists of content downloaded or streamed to the terminal for consumption of the user, particularly video and web pages. Such downloading/streaming normally involves transfer of content from a source (such as server 40 in Figure 2) over the core network to a base station, and from there over a wireless cellular link to the user's mobile device, which leads to duplicate access of content from the core network or other servers. As demand increases, simple densification of the cellular network with more cells will not solve the core network capacity crunch. Moreover it can increase significantly the processing requirements on the core network, in terms of multitude of handovers for example. Consequently there is a desire to offload mobile data traffic from cellular networks where possible.

One way of offloading mobile data traffic is to use the above mentioned D2D communication, employing complementary network communication technologies (e.g. WiFi) to deliver the traffic instead of transmission over cellular networks.

There are several existing proposals for diffusion and dissemination of social networking generated information in wireless networks in order to effectively propagate the information among mobile users. Information diffusion has been extensively investigated through social networks, with recent focus on exploitation of social participation and interaction to offload mobile data traffic. Meanwhile, opportunistic networks have been studied for peer-to-peer data dissemination and sharing for mobile devices, aiming at increasing the data availability for users with intermittent connectivity.

Among these proposals, Han and et al., "Mobile Data Offloading through Opportunistic Communications and Social Participation" proposed to intentionally delay the delivery of information over cellular networks and offload it through the free opportunistic communications, with the goal of reducing mobile data traffic. The information to be delivered in mobile networks may include multimedia newspapers, weather forecasts, movie trailers, etc. Benefiting from the delay-tolerant nature of non-real-time applications, the information may be delivered to only a small fraction of selected users (i.e. target users) to reduce mobile data traffic.

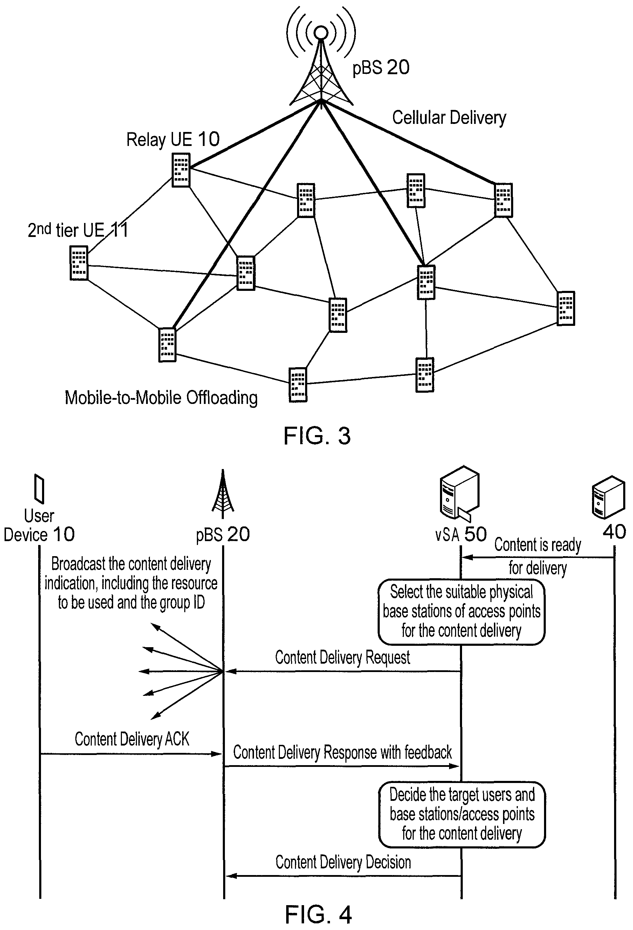

Figure 3 shows a snapshot of the contact graph for a small group of subscribed mobile users. As shown in Figure 3, information is transmitted from a base station 20 to target users via wireless cellular links (shown by solid lines). The target-users can then help to further propagate the information among all the subscribed users through their social participation, when their mobile phones are within the transmission range of each other and can communicate opportunistically.

In this scenario, there is a need to provide a content delivery mechanism to efficiently deliver certain content that has non-real-time nature while offloading such data traffic from the cellular network.

### Summary of the Invention

According to a first aspect of the present invention, there is provided a wireless communication system for delivering content to terminals, comprising:
a service anchor for managing content delivery to the terminals, connected to a content delivery node for storing content to be delivered to the terminals;
a base station connected to the content delivery node and the service anchor and arranged for wireless communication with at least one first terminal selected among the terminals; and
at least one second terminal equipped for device-to-device communication with a said first terminal;
wherein the service anchor is arranged to:
   send a content delivery request to the base station and receive information from the base station regarding signals transmitted by the terminals;
   select the at least one first terminal on the basis of the information received from the base station; and
   instruct the base station regarding the first terminal to which to deliver the content; and
   wherein the base station is arranged to:
      obtain the content from the content delivery node, transmit the content to the first terminal and inform the first terminal of the second terminal;
and wherein the first terminal is arranged to:
   receive the content from the base station and to perform device-to-device communication with the second terminal to deliver the content to the second terminal.

Here, the "first terminal" corresponds to a target or first tier user described later. The "second terminal" corresponds to a second tier user referred to later. Thus, the first terminal receives content from the base station and uses D2D to forward the content to the second terminal.

Preferably the base station is arranged, in response to the receiving the content delivery request, to broadcast a content delivery indication to terminals in range of the base station. This indication informs terminals within range that the base station wishes to make a content delivery.

The signals transmitted by the terminals may include acknowledgements of the content delivery indication and the base station may be further arranged, in response to receiving the acknowledgements, to transmit said information to the service anchor.

Such acknowledgements sent by the terminals may indicate an interest in receiving the content and may include at least an identifier.

Here, the identifier preferably identifies at least one of:
the terminal;
a group of terminals subscribed to the content delivery service of the service anchor;
other terminals which the terminal has detected for possible device-to-device communication.

The acknowledgement, sent by the terminal, preferably further indicates the capability of the terminal to be a said first terminal (in other words its suitability to forward the content to at least one second terminal via D2D).

Preferably the service anchor is arranged to select the at least one second terminal from among terminals not selected as a said first terminal, on the basis of interest in receiving the content.

The service anchor may be arranged to select the at least one first terminal based on one or more of:
device capability of each terminal;
relative locations of terminals to the base station and to one another;
battery status of each terminal.

There may be a plurality of base stations, in which case the service anchor may be further arranged to select one or more base stations for the content delivery on the basis of how many terminals are in wireless communication with the base station, the or each selected base station being arranged to obtain the content from the content delivery node.

Preferably, in any system as defined above, the service anchor is arranged to send the content delivery request in response to the receiving a notification of content availability from the content delivery node.

The base station may be arranged, in response to the instruction from the service anchor, to set up a control bearer between the base station and the second terminal, the control bearer supporting a first data bearer between the base station and the first terminal and a second data bearer between the first terminal and the second terminal.

The service anchor may be arranged to determine whether to deliver to a said terminal the whole content or a sample thereof on the basis of one or more of the following criteria:
whether the terminal is in idle or active mode;
battery level of the terminal;
speed of movement of the terminal;
processing load on the terminal.

According to a second aspect of the present invention, there is provided a service anchor for managing delivery of content to terminals, the service anchor connected to a content delivery node for storing content to be delivered to the terminals and connected to a base station which is arranged for wireless communication with at least one first terminal selected among the terminals and a second terminal equipped for device-to-device communication with the first terminal;
wherein the service anchor is arranged to:
   send a content delivery request to the base station and receive from the base station, acknowledgements transmitted by the terminals;
   select the at least one first terminal on the basis of the acknowledgements received from the base station; and
   instruct the base station regarding the first terminal to which to deliver the content, whereby the first terminal can receive the content from the base station and to perform device-to-device communication with the second terminal to deliver the content to the second terminal.

According to a third aspect of the present invention, there is provided a content delivery method for use in a wireless communication system in which at least one base station communicates wirelessly with terminals, the method comprising:
storing content to be delivered in a content delivery node;
providing a service anchor, connected to the content delivery node, for managing content delivery to terminals;
the service anchor sending a content delivery request to the base station and receiving information from the base station regarding signals transmitted by the terminals;
the service anchor selecting, on the basis of the information received from the base station, at least one first terminal to receive the content from the base station;
the service anchor informing the base station of the first terminal to which to deliver the content;
the content delivery node transmitting the content to the base station, the base station transmitting the content to the first terminal and informing the first terminal about the second terminal; and
the first terminal performing device-to-device communication with the second terminal to deliver the content to the second terminal.

A further aspect relates to software for allowing a computer to provide the service anchor as defined above. Such software may be recorded on a computer-readable medium, or it may, for example, be in the form of a signal such as a downloadable data signal provided from an Internet website, or it may be in any other form.

Thus, embodiments of the present invention can provide an opportunistic content delivery mechanism where certain content with relaxed time restriction can be delivered via opportunistic communications so that such data traffic can be offloaded from the cellular network. Two specific methods are proposed: 1) a QoS guaranteed content delivery mechanism; 2) context-aware adaptive content delivery.

The invention has advantages such as the following:
* Opportunistic content delivery via machine type (i.e. autonomous) communication so the traffic can be offloaded from the mobile network;
* Reduce the delivery cost, while maintaining the required QoS;
* Context aware in order to guarantee QoE.

In general, and unless there is a clear intention to the contrary, features described with respect to one embodiment of the invention may be applied equally and in any combination to any other embodiment, even if such a combination is not explicitly mentioned or described herein.

As is evident from the foregoing, the present invention involves signal transmissions between base stations and user equipments in a wireless communication system. A base station/access point or BS/AP (referred to in the claims and elsewhere as simply "BS" or "base station" for convenience) may take any form suitable for transmitting and receiving such signals. It is envisaged that a BS/AP will typically take the form proposed for implementation in the 3GPP LTE and 3GPP LTE-A groups of standards, and may therefore be described as an eNodeB (eNB) (which term also embraces Femto eNB or FeNB) as appropriate in different situations. However, subject to the functional requirements of the invention, some or all BS/APs may take any other form suitable for transmitting and receiving signals from user equipments.

Similarly, in the present invention, each user equipment may take any form suitable for transmitting and receiving signals from base stations. For example, the user equipment may take the form of a subscriber station, or a mobile station (MS), or any other suitable fixed-position or movable form. For the purpose of visualising the invention, it may be convenient to imagine the user equipment as a mobile handset (and in many instances at least some of the user equipments will comprise mobile handsets), however no limitation whatsoever is to be implied from this. For example, at least some of the donor terminals may be machine-type communication (MTC) devices such as vending machines, smart meters and the like.

### Brief Description of the Drawings

Reference is made, by way of example only, to the accompanying drawings in which:
Figure 1 (a) schematically illustrates conventional wireless cellular communication and Figure 1 (b) illustrates D2D communication;
Figure 2 shows a mixed network with wireless cellular links and D2D links;
Figure 3 shows a contact graph for a group of mobile devices;
Figure 4 is a flowchart of a user selection procedure in an embodiment of the present invention;
Figure 5 illustrates a bearer architecture applicable to embodiments of the present invention;
Figure 6 shows an example use case of an embodiment of the present invention;
Figure 7 is a block diagram illustrating an example of a service anchor employed in embodiments of the present invention;
Figure 8 is a block diagram illustrating an example of a terminal to which the invention may be applied; and
Figure 9 is a block diagram illustrating an example of a base station to which the invention may be applied.

### Detailed Description

This invention is based on, but not limited to, a cloud based mobile network, where basic infrastructure is provided by one or more operators, shared by several virtual operators. Of particular relevance to the present invention, one virtual operator has the service to deliver content to its subscribers, such as multimedia newspapers, weather forecasts, movie trailers, etc. Other examples of "content" for present purposes would include operating system and application updates, healthcare services and the like.

Such content delivery has a relaxed requirement on delivery time, for example, it may suffice for the content to be delivered in several hours, or before 9:00 am. On the other hand, it may be desirable or essential that the content be delivered; thus, reliability of delivery is important. Moreover, in order to reduce the operation cost while guarantee the content delivery, the operator prefers to minimise the data traffic going through cellular network (both core network and radio access network).

In short, the problem requiring a solution is how to efficiently deliver certain content that has non-real-time nature while offloading such data traffic from the cellular network.

The invention proposes an opportunistic content delivery mechanism where certain content with relaxed time restriction can be delivered via opportunistic, device-to-device communications so that such data traffic can be offloaded from the cellular network.

For the purposes of the embodiment to be described, it is assumed that a virtual network is created for a specific virtual operator, where one or more virtual service anchors (vSAs) are responsible for such content delivery. Such a virtual operator may provide various services to users, only some of which users will wish to receive the content. Alternatively the virtual operator may be one for which the sole or primary purpose is provision of this specific service, so that all the users can receive the content. However, it should be noted that the present invention is equally applicable to a conventional, single-operator infrastructure, in which case the virtual service anchor is simply a "service anchor", SA. Below, the terms "vSA" and "SA" are used interchangeably.

In either case, the service anchor has to be connected to the core network directly or indirectly. In one example, the SA 50 can be assumed to be part of the core network, for example by being co-located with an MME. Another example is that the SA is a "third-party" node that links to an operator's (infrastructure owner's) network. Below, the term service anchor/SA will be understood to include virtual service anchor. The geographical coverage of service anchors will vary in accordance with the type of service(s) for which it is responsible. For example a SA responsible for delivering a weather forecast might cover an entire country or province; by contrast a SA which serves content related to special offers in a shopping mall might cover only users in the shopping mall. In either case, it can be assumed in general that the SA is responsible for managing content delivery using multiple base stations or access points selected from the base stations present in the area being serviced. For convenience, the terms "BS" and "base station" are used below to denote radio nodes which may be a base station, access point, or both and which may employ one or more RAT. The SA 50 can be viewed as a control-plane entity, which is normally different from the actual source of the content. The SA thus co-ordinates the content delivery of content provided by a certain service operator (service provider).

Figure 4 illustrates an example target user selection procedure where certain content with relaxed time restriction is ready to be delivered to the subscribers of a virtual operator. Incidentally, references to "subscribers" and "users" below also includes the mobile devices of such subscribers/users unless demanded otherwise by the context.

This procedure includes the following steps:
1) A content delivery node (server) 40 in Figure 4 informs the SA 50 that it has some content ready for distribution. Normally, the server 40 will divide the content into parts (chunks or segments) to facilitate distribution. Further division of the content may occur at lower protocol layers of the network. For example a fragmentation in the MAC layer will divide packets into MAC frames for physical layer transmission based on the network condition (e.g. channel condition in wireless links).
2) In response to the this notification, the SA 50 selects the physical base stations for the content delivery, and sends a content delivery request to the selected base stations. This content delivery request can be regarded as an advance warning to base stations that there is content to be distributed. In the request, the policy for this delivery may be included, for example, "operation cost efficient" (i.e. offloading the data traffic to the complementary communication methods when possible).

It will be noted that a conventional BS/AP would not be able to understand such a policy, and it would be necessary to define new messages/procedures as part of the communications standard(s) employed by the BS/AP. For example in the case of LTE, new procedures would need to be implemented in the S1-MME interface between the eNB and MME. Additionally, there may be a need to define the service anchor as a new logical node together with a new interface between the SA 50 and MME. Alternatively it would be possible to define a direct interface between SA and eNB so that the MME is not required to relay or map information exchanges between the SA and eNB.

Normally, the content delivery request would not itself contain the content (which usually comes not from the service anchor but from a separate content delivery node), however it may be possible to include a sample (preview or abstract) of the content along with the content delivery request.

The selection of base stations to which to transmit the content delivery request may be based on the related statistics and user profiles. For example, in the case of morning news/weather delivery the base stations and access points in the residential areas and transport area would be a natural choice.
3) A selected base station then broadcasts the content delivery indication in its coverage area, which include the information for communication method to be used for this delivery, e.g. radio resource to be used for device-to-device type communication (including both multicast and unicast) and a group ID for this delivery.

Here, the radio resource refers to the (semi-statically or statically) allocated resource pool for D2D communications, for example D2D broadcast transmission using a fixed number of "resource blocks" as defined in LTE. Alternatively or in addition the radio resource may specify the RAT to be used for the D2D communication. The "group ID" identifies users (or more precisely, devices of users) to receive the content, and is associated with users' subscriptions that can be used to identify types of content to be delivered. The group ID is useful when devices respond to a content delivery indication (see below), particularly when the user devices are mobile; for example when a user moves from one cell (BS/AP) to another, the group ID helps the device to identify the correct content to receive, and the SA 50 can employ the group ID to configure several BS/APs with suitable resources to deliver the content.
4) Upon receipt of the broadcast, users in the area respond (Figure 4, Content delivery ACK) via a communication method indicated in the content delivery request; this response may include the user ID (and device capability) and the interested group ID of the content delivery, as well as the IDs of the nearby users that it has detected (with sufficient signal strength). User devices may be configured to respond only to a content delivery indication regarding content to which the user has subscribed. There may also be a user setting either to the opt in to acting as a target UE (see below) in return for an incentive), or to the opt out for any reason (such as insufficient battery power).
5) The selected base stations or access points collect the feedback from the users which sent a Content delivery ACK, and forwards the feedback (or information derived therefrom) to the Service Anchor.
6) The next stage is for the SA 50 to select so-called "target users" to receive the content over the wireless cellular network. These target users can be regarded as "first tier users". They normally, but not necessarily, users who are interested in receiving the content. There could be other reasons, apart from interest of the user in the content, why a user might wish to act as a target user - for example an incentive provided by the service provider. These target users may later be employed in D2D communication to forward the content opportunistically to other, "second tier" users.

The SA 50 decides the target users in the target base stations and/or access points for the content delivery, based on criteria such as the following:
* A base station or access point with most of the users would be a natural choice to receive the content for further distribution.
* In a target base station or access point, the selection of target users is based on
   ∘ User profile, device capability, statistics
   ∘ Users close to the base station or access point

Another criterion may be the potential for interference to other users due to D2D communication. If usage of a relay UE for content delivery to a given user would cause interference or lead to scheduling problems for normal network communication then the BS/AP could indicate this situation to the SA 50, which will then arrange for the given user to be a 1^{st} tier user (i.e. to receive the content through the cellular network).

The SA 50 informs the BS/APs of the target users by the message "content delivery decision" shown in Figure 4.

It will be noted that selection of the target users implicitly also selects the second tier users, in that users which have sent the content delivery ACK and are not selected as target (first tier) users, become the second tier users. It is not necessary for every target user to forward content to other users; this will depend on whether other users interested in the content are located in sufficient proximity to the target user.

It should also be noted that in the above criteria, "device capability" can include whether or not devices are stationary with access to mains power and/or fixed broadband connections. Such devices are especially useful as target users because they are not constrained by battery power for forwarding content to other users, or by communications bandwidth for receiving content. The above mentioned MTC devices may be examples of such devices, whether or not they have human "users" in the normal sense.
7) The Service Anchor 50 informs the target BS/AP(s) 20 with the target users for the content delivery, and the users for content delivery through the target users, using the respective user IDs to identify the users. In other words the SA 50 informs target base stations both of:
   - the target users for the BS/AP to deliver the content to; and
   - the 2nd-tier users who are to receive the content through the target users.
8) Although not shown in Figure 4, content delivery from the content delivery node 50 to each BS/AP then occurs. This can be arranged in various ways: one option is to involve the core network, with the content delivery node forwarding the content to a P-GW, then S-GW to each BS/AP. Another technique, called "local breakout" (LIPA or SIPTO), allows the data traffic involved in delivering the content to be offloaded to a broadband internet connection of the BS/AP, without involving the core network. In either case, the BS/AP may temporarily store the content (along with a sample thereof, see below). Such stored content could be deleted or overwritten in the BS/AP automatically, for example upon receipt of the next update or edition of a newspaper, weather forecast or the like.
9) A target base station or access point then starts content delivery to the target users in its coverage via cellular or infrastructure-mode communication or, if available via device to device communication. In addition the BS/AP informs the target users about the second tier users, in other words the users for receiving the content delivery via follow-up device to device communication. It will be noted that content delivery is a separate step from the content delivery request, the former being a user-plane action whereas the latter is a control plane action. As mentioned below, at least for some users the content delivery may comprise first delivering a sample of the content, to be followed later by the whole (or by the remaining) content.

The target users receive the content from the target base station, then forward the content to the second tier users; also the target user informs the target base station if any 2nd tier user drops out (in other words, is no longer capable of being reached by D2D communication) and/or if any new users appear in its vicinity.

A target base station or access point then updates the service anchor about the delivery: if any target user and or 2nd tier user drops out, by updating the SA 50 with the status of the successfully delivered content chunks; if any new users in its coverage and/or new users near the target users. The service anchor can arrange 2nd round delivery based on the feedback. This can involve a repeat of Step 7), but specifying only target users and/or 2^{nd}-tier users who did not yet receive the content.

Having described the general principle of operation, two more specific mechanisms or embodiments will now be described.

### Content delivery guarantee

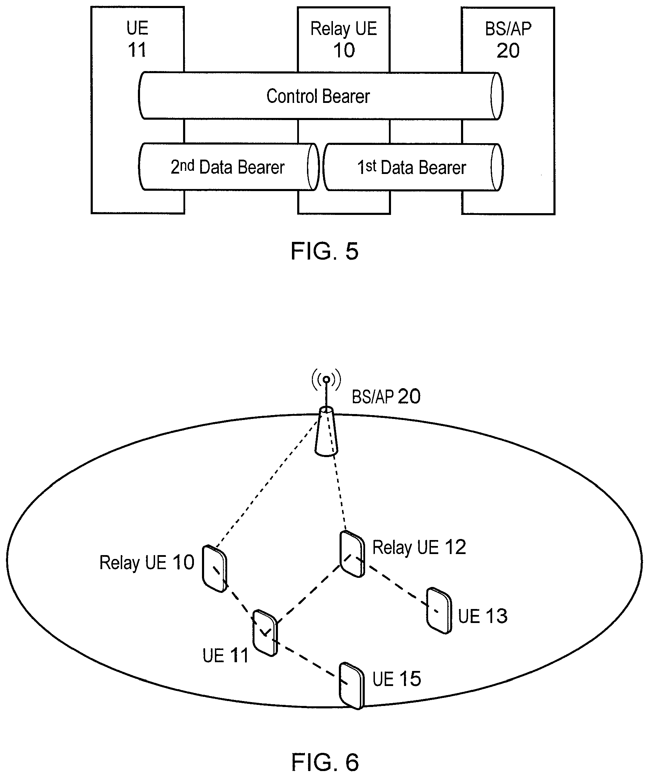

In this embodiment, a QoS guaranteed content delivery mechanism is proposed. Separate data bearers are set up directly between the BS/AP 20 and the target user device (Relay UE 10 in Figure 5), and the Relay UE and the 2nd tier user (UE 11 in Figure 5), while a control bearer is set up between the target base station or access point (BS/AP 20 as shown in Figure 5) and the user device (UE 11 in Figure 5), the purpose of the control bearer being to support and manage the 2^{nd} data bearer (since the 1^{st} data bearer is determined by the BS/AP, there is no need for the control bearer to manage it).

Whether or not to set up this control bearer may depend on the capability and/or the preference of the 2^{nd} tier user device, as well as the application layer requirements for the content delivery. This control bearer may be set up directly between the BS/AP and the UE, or via the relay UE. Thus, a control bearer is set up if a QoS guarantee is required based on the preference of the 2^{nd} tier device and the application layer requirements for the content delivery.

The light-weight control information carried over the control bearer includes the following functions if required:
* basic configuration for the 2nd data bearer, e.g. setup, tear down, spectrum to use, etc.
* mobility support, e.g. upon the change of the Relay UE
* basic feedback configuration, e.g. measurement report from the Relay UE and/or the UE

In addition, the BS/AP may provide overall control of the device to device communications among the UEs for the purpose of QoS control, load balancing and/or congestion control. As will be appreciated, such control of D2D communication by a BS/AP goes beyond the existing, purely opportunistic D2D communication and would require configuration changes at a UE level, which may be incorporated into future communications standards (such as a future LTE Release). As part of such changes, various QoS classes could be defined for the content delivery via D2D based on application layer requirements.

There are several examples of such functions in the case (illustrated in Figure 6) where there are several device to device communications on-going among the UEs served and coordinated by a BS/AP:
(a) in the case Relay UE 12 (as shown in Figure 6) has to handle more traffic, the BS/AP 20 can schedule more (device to device communication) resource for Relay UE 12;
(b) in the case UE 11's application required higher data rate and throughput and initially the device to device communication for this application is only between UE 11 and Relay UE 10, the BS/AP 20 can set up the additional device to device communication between Relay UE 12 and UE 11;
(c) in the case of congestion, the BS/AP 20 can suspend any low priority device to device communication in order to guarantee the QoS of high priority communication.

Other considerations which the BS/AP may take into account include energy consumption of the UEs and interference control.

In Figure 6, it will be noted that UE15 requires two hops of relay communication to receive the content, in other words three hops in total, in contrast to the other UEs requiring two hops at the most. In this case a control bearer can be set up between the BS/AP 20 and UE15 and a total of three data bearers: for example one bearer between BS/AP 20 and relay UE10, a second between UE 10 and UE 11, and a third between UE11 and UE15. In this situation, UE11 can be regarded as both a 2^{nd} tier user (receiving the content via D2D communication from relay UE 10) and a relay UE (for UE15).

### Context-aware adaptive content delivery

Initial content delivery may take different forms, whether the full content or a sample only (e.g. news headlines), depending on the context related to end users and user devices. Such context includes:
(i) Idle vs. Active
   Active mode is defined as when the device is in use, e.g. engaged in an application session online (via any access network), or running an application offline (e.g. offline game). Otherwise, the device is in idle mode. When receiving a content delivery indication from the network, the user device may provide such context information to the network.
   If the device is in idle mode, it is more likely the end user will not look at the content immediately compared with when it is in active mode. So it is reasonably to initially deliver only a preview to an idle device. Such a preview will take different forms depending on the nature of the content, and could include for example an abstract of a document, a sample or title screen of a movie trailer, or a summary of a weather forecast.
(ii) Battery level
   This is another piece of information the user device may provide to the network. If the battery level is low (and the device is not being charged), it is preferable to initially deliver only the abstract in order to limit the battery consumption. In the case that a UE has a very low battery level, it may be configured not to respond to the initial content delivery indication at all.
(iii) Moving speed
   Speed information, maybe also with location information, will help the network to decide not only what content to deliver also on how to select the most suitable means for the initial content deliver. For example, the SA could select a BS/AP with a larger coverage area for content delivery to a user moving at a high speed. Moreover, a UE moving at high speed would be less preferred for selection as a target UE, unless it is in proximity of 2nd tier UEs moving with similar speed.
(iv) Device load information
   This is an important piece of information that the network may use to decide how and what content to deliver. Device load includes traffic load, CPU usage and storage usage of a device. For a heavily loaded device it is preferable to initially deliver only the abstract. A heavily loaded device is also less preferred for selection as a target UE.

Full content delivery may be triggered once the end user starts looking at the content. For example, the user will start up a multimedia app on the user device to reproduce the content, and activation of this app can be notified to the BS/AP. In this case, the BS/AP may conveniently be used as a temporary repository for the content, so that the full content can be downloaded without reference to the core network. If this is not possible then the follow-up content delivery service request may be sent to the network so that the full content delivery is triggered.

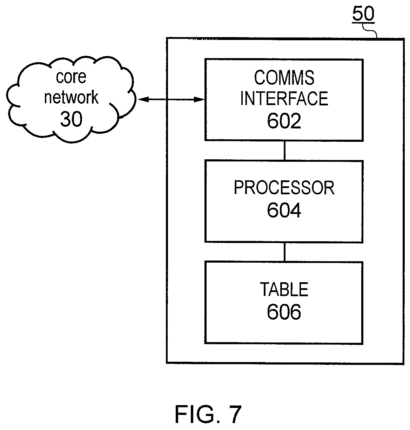

Figure 7 is a block diagram illustrating an example of a service anchor 50 to which the present invention may be applied. The SA may be provided in the form of a conventional computer connected to the core network 30 as indicated in the Figure, and thereby to each BS/AP. A communications interface 602 of the SA 50 deals with communications to and from base stations, content delivery nodes and so forth. A processor 604 is programmed or otherwise configured to perform the various functions described above, such as taking decisions about target UEs and 2nd tier UEs. A Table 606 is maintained by the processor to record details of relay UEs and the state of connections between UEs, including D2D links of the 2nd tier UEs with other UEs.

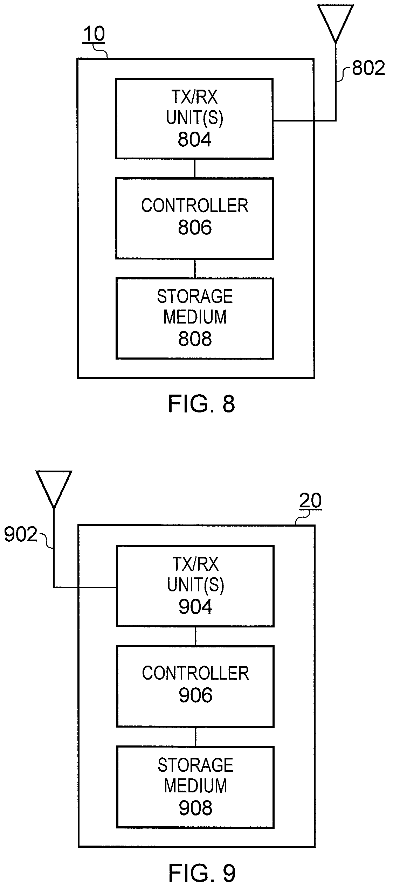

Figure 8 is a block diagram illustrating an example of a UE 10 (terminal, mobile device) to which the present invention may be applied. The UE 10 may include any type of device which may be used in a wireless communication system described above and may include cellular (or cell) phones (including smartphones), personal digital assistants (PDAs) with mobile communication capabilities, laptops or computer systems with mobile communication components, and/or MTC devices as discussed earlier. The UE 10 includes transmitter/receiver unit(s) 804 connected to at least one antenna 802 (together defining a communication unit) and a controller 806 having access to memory in the form of a storage medium 808. The controller may be, for example, a microprocessor, digital signal processor (DSP), ASIC, FPGA, or other logic circuitry programmed or otherwise configured to perform the various functions described above, such as initiating (under control of the BS/AP and/or SA) a D2D link with another UE. For example, the various functions described above may be embodied in the form of a computer program stored in the storage medium 808 and executed by the controller 804. The storage medium 808, or another storage medium, stores the content cached by the UE. The transmission/reception unit 804 is arranged, under control of the controller 806, to send a content delivery ACK to the network, receive from the network an instruction to form a D2D link and so forth as discussed previously.

Figure 9 is a block diagram illustrating an example of a BS/AP 20 to which the present invention may be applied. The base station includes transmitter/receiver unit(s) 904 connected to at least one antenna 902 (together defining a communication unit) and a controller 906. The controller may be, for example, microprocessor, digital signal processor (DSP), ASIC, FPGA, or other logic circuitry programmed or otherwise configured to perform various functions such as performing resource allocation (under network control) for the UEs which it serves. For example, the various functions described above may be embodied in the form of a computer program stored in the storage medium 908 and executed by the controller 906. The transmission/reception unit 904 is responsible for receiving the content delivery request from the SA and content delivery ACK from UEs, transmitting the content delivery indication and, later, the content pushed to the base station by the SA, and transmitting instructions for UEs from higher layers including the SA under control of the controller 906.

To summarise, embodiments of the present invention provide a content delivery method employing opportunistic D2D links among UEs, in a two-stage process. In a first stage, content is delivered from a content delivery node to a first tier of "target UEs" through the core network and conventional cellular communication. In the second stage, the target UEs act as relays for other, 2nd tier UEs which wish to receive the content, by delivering the content over opportunistic D2D links. The process is controlled by a service anchor of an operator providing the content delivery service.

Various modifications are possible within the scope of the present invention.

The feature of "device-to-device" or "D2D" communication is to be understood broadly. It may refer to wireless communication using the same RAT as the cellular network and on licensed spectrum available to the network operator. However, the present invention can also be applied to other types of short-range wireless technology between UEs, including Wi-Fi (in particular WiFi Direct) and WPAN technologies including Bluetooth (IEEE 802.15), so long as the SA and/or BS/AP is able to guide the UEs' usage of these technologies.

Although the above description refers to a separate SA for each service provider (e.g., virtual operator), this is not essential and the SA could be integrated within a control node of the physical infrastructure operator.

In the above embodiments, it was assumed that the SA decides the target users (and by implication, the 2nd tier users) and thus whether to use D2D links for content delivery to a specific user. Alternatively this decision may take into account wishes of the user. For example the user may have the option (through a setting on the user device) to obtain the content locally D2D by use of the present invention (at low or zero cost) or retrieve the content directly from the cellular network (at higher cost).

The method described above considered one D2D link at a time for simplicity. However, it may be possible for the SA and one or more BS/AP to arrange multiple simultaneous D2D links from different relay UEs to the same 2nd tier UE, employing different time/frequency resources to avoid interference.

It was also assumed above that the relay UE is a UE of a user interested in the content (i.e. a subscriber identifiable by the group ID). This is not essential, however. In return for a suitable incentive (such as an extra data allowance or credit against network charges), a relay UE may accept content which has not specifically been subscribed to by the user but which it is useful for the SA to have made available by that UE. Likewise, the above mentioned MTC devices may be employed as relay UEs even though they may have no human user who subscribes to the content.

### Industrial Applicability

Embodiments of the present invention can improve efficiency in a wireless communication network by reducing the need for content delivery to take place via the cellular network and via retrieval of content over a core network, instead taking advantage of opportunistic D2D links between terminals.

## Claims

1. A wireless communication system for delivering content to terminals, comprising:
a service anchor for managing content delivery to the terminals, connected to a content delivery node for storing content to be delivered to the terminals;
a base station connected to the content delivery node and the service anchor and arranged for wireless communication with at least one first terminal selected among the terminals; and
at least one second terminal equipped for device-to-device communication with a said first terminal;
wherein the service anchor is arranged to:
send a content delivery request to the base station and receive information from the base station regarding signals transmitted by the terminals;
select the at least one first terminal on the basis of the information received from the base station; and
instruct the base station regarding the first terminal to which to deliver the content;
wherein the base station is arranged to:
obtain the content from the content delivery node, transmit the content to the first terminal and inform the first terminal of the second terminal;
and wherein the first terminal is arranged to:
receive the content from the base station and to perform device-to-device communication with the second terminal to deliver the content to the second terminal.

2. The system according to claim 1 wherein the base station is arranged, in response to the receiving the content delivery request, to broadcast a content delivery indication to terminals in range of the base station.

3. The system according to claim 2 wherein the signals transmitted by the terminals include acknowledgements of the content delivery indication and the base station is further arranged, in response to the receiving the acknowledgements, to transmit said information to the service anchor.

4. The system according to claim 3 wherein said acknowledgement indicates an interest in receiving the content and includes at least an identifier.

5. The system according to claim 4 wherein the identifier identifies at least one of:
the terminal;
a group of terminals subscribed to the content delivery service of the service anchor;
other terminals which the terminal has detected for possible device-to-device communication.

6. The system according to claim 4 or 5 wherein the acknowledgement of the terminal further indicates the capability of the terminal to be a said first terminal.

7. The system according to any of claims 4 to 6 wherein the service anchor is arranged to select the at least one second terminal from among terminals not selected as a said first terminal, on the basis of interest in receiving the content.

8. The system according to any preceding claim wherein the service anchor is arranged to select the at least one first terminal based on one or more of:
device capability of each terminal;
relative locations of terminals to the base station and to one another;
battery status of each terminal.

9. The system according to any preceding claim wherein there are a plurality of base stations and the service anchor is further arranged to select one or more base stations for the content delivery on the basis of how many terminals are in wireless communication with the base station, the or each selected base station being arranged to obtain the content from the content delivery node.

10. The system according to any preceding claim wherein the service anchor is arranged to send the content delivery request in response to the receiving a notification of content availability from the content delivery node.

11. The system according to any preceding claim wherein the base station is arranged, in response to the instruction from the service anchor, to set up a control bearer between the base station and the second terminal, the control bearer supporting a first data bearer between the base station and the first terminal and a second data bearer between the first terminal and the second terminal.

12. The system according to any preceding claim wherein the service anchor is arranged to determine whether to deliver to a said terminal the whole content or a sample thereof on the basis of one or more of the following criteria:
whether the terminal is in idle or active mode;
battery level of the terminal;
speed of movement of the terminal;
processing load on the terminal.

13. A service anchor for managing delivery of content to terminals, the service anchor connected to a content delivery node for storing content to be delivered to the terminals and connected to a base station which is arranged for wireless communication with at least one first terminal selected among the terminals and a second terminal equipped for device-to-device communication with the first terminal; wherein the service anchor is arranged to:
send a content delivery request to the base station and receive from the base station, acknowledgements transmitted by the terminals;
select the at least one first terminal on the basis of the acknowledgements received from the base station; and
instruct the base station regarding the first terminal to which to deliver the content, whereby the first terminal can receive the content from the base station and to perform device-to-device communication with the second terminal to deliver the content to the second terminal.

14. A content delivery method for use in a wireless communication system in which at least one base station communicates wirelessly with terminals, the method comprising:
storing content to be delivered in a content delivery node;
providing a service anchor, connected to the content delivery node, for managing content delivery to terminals;
the service anchor sending a content delivery request to the base station and receiving information from the base station regarding signals transmitted by the terminals;
the service anchor selecting, on the basis of the information received from the base station, at least one first terminal to receive the content from the base station;
the service anchor informing the base station of the first terminal to which to deliver the content;
the content delivery node transmitting the content to the base station, the base station transmitting the content to the first terminal and informing the first terminal about the second terminal; and
the first terminal performing device-to-device communication with the second terminal to deliver the content to the second terminal.

15. Software which, when executed by a computer connected to a wireless communication system, causes the computer to provide the service anchor according to claim 13.
